# EUROPEAN PATENT APPLICATION

(11) **EP 3 493 122 A1**
(43) Date of publication of application: **05.06.2019**
(21) Application number: 18215351.0
(22) Date of filing: 02.09.2016
(51) Int. Cl.: G06Q 10/00, G06Q 10/02

(54) **DEPARTURE CONTROL SYSTEM**

(30) Priority: 03.09.2015 CH 12672015
(62) Divisional of application: 16760074.1
(71) Applicant: Zamar AG, 8049 Zurich (CH)
(72) Inventor: KABILOV, Zafar, 734002 Dushanbe (TJ)
(74) Representative: Rentsch Partner AG

(57) **Abstract**

Disclosed is a Departure Control System (DCS), including:
a) a central DCS unit (1), the central DCS unit (1) including a central DCS unit communication interface (10) for operatively connecting to and exchanging information with at least one airport DCS unit (2) remote from the central DCS unit (1);
b) at least one airport DCS unit (2), the at least one airport DCS unit (2) including an airport DCS unit communication interface (20) for operatively connecting to and exchanging information with the central DCS unit (1).

The at least one airport DCS unit (2) includes or is operatively connected to an RFID communication unit, the RFID communication unit being configured to exchange flight-related data, in particular flight-related data of a specific passenger, with an RFID chip.

The flight-related data include baggage identification data, the baggage identification data being indicative for a specific piece of baggage and a specific flight, and wherein the RFID communication unit includes an RFID programmer (33), and wherein the at least one airport DCS unit (2) is configured to program the baggage identification data for a plurality of flights into one and the same RFID chip, the RFID chip being a recordable RFID chip and being associated with the piece of baggage.

## Description

### TECHNICAL FIELD

The present invention lies in the general technical field of aviation industry and aviation data handling. More particular it lies in the field of Departure Control Systems (DCSs) and associated equipment.

### BACKGROUND

Departure control systems (DCSs) process and handle a large variety of aviation-related data. Such data include flight-related data of specific flights and/or passengers, e. g. Passenger Name Lists and Additional Deleting Lists. The data that are processed and handled by a DCS further include general airline related data, such as seasonal flight schedules, aircraft fleet databases, seat maps of the aircrafts, and the like. Current DCSs are further designed to exchange data with other DCSs, e. g. for through-check-in purposes, and to communicate with airport information systems, e. g. for sending post departure messages in accordance with the IATA (International Air Transport Association) standards.

The DCSs belong to the backbone of the IT infrastructure of the airlines and are located worldwide in operation and computing centres of the airlines. For check-in and boarding, data exchange is required between terminal devices, in particular check-in counters, self-check-in kiosks and gate agent's work stations at a departure airport, and the DCS of the corresponding airline. DCSs and terminals are supplied from a number of suppliers. Data exchange between the DCS and the terminals at the airport typically relies on Internet connections.

### SUMMARY OF DICLOSURE

In spite of generally advanced present state of aviation data management and the availability of proven and sophisticated DCSs, a number of problems and drawbacks exists with present systems under typical and particularly under untypical and adverse operational conditions.

For example, the typical present architecture of central DCSs and terminal devices at the airports relies on substantially continuous and uninterrupted (Internet) communication between the DCSs and the airport terminals. This communication requirement is worldwide and includes countries and/or areas of comparatively little IT infrastructure of and/or IT infrastructure of limited performance. Even if sufficient communication performance is generally available, the required amount of data communication is enormous for larger (international) airports, an aspect that is expected to further increase in importance due to foreseeable air traffic increases. It is accordingly desirable to reduce/limit the amount of data traffic between airports and external data centres where the DCSs are typically installed, and/or improve the robustness with respect to limitations/interruptions of the data communication.

A further drawback of the aviation data handling, particularly flight-related data handling, according to the present state of the art is a huge amount of paper that is required for printing boarding passes and/or baggage tags which are used for only a very limited of period of time and are subsequently discarded, which is of both financial and environmental impact. It is accordingly desired to reduce (and ideally largely avoid) the need for printed boarding passes and/or baggage tags.

Especially larger (international) airports frequently face the problem that passengers that are booked and validly checked in for a specific flight do not show up at the gate in time. At present, such passengers are publicly announced and requested to proceed to the gate. This procedure is known to be unsuccessful in a significant number of cases. Besides from the passenger missing the flight, this situation requires considerable additional effort, such as removing the passenger from the passenger name list, removing the baggage, and booking the passenger for a subsequent flight. It is accordingly desirable to improve the methods for informing a passenger who is likely to miss a flight and increase the chance of the passenger to show up at the gate in time for boarding.

It is the overall object of the present invention to improve the state of the art with respect to handling of aviation data, particularly flight-related data. Favourably, the situation with respect to one or more of the above-mentioned aspect is improved. The overall object is solved in a general way by the subject matter of the independent claims. Exemplary and/or particularly favourable embodiments are defined by the dependent claims as well as the overall disclosure of the present document.

According to an aspect, the overall object is achieved by providing a Departure Control System (DCS). The DCS includes a central DCS unit, the central DCS unit including a central DCS unit communication interface for operatively connecting to and exchanging information with at least one airport DCS unit remote from the central DCS unit. The DCS further includes at least one airport DCS unit, the at least one airport DCS unit including an airport DCS unit communication interface for operatively connecting to and exchanging information with the central DCS unit. The central DCS unit is designed to execute a set of central DCS routines and the at least one airport DCS unit is designed to execute a set of airport DCS routines. The at least one airport DCS unit includes or is operatively connected to an RFID communication unit, the RFID communication unit being configured to exchange flight-related data, in particular flight-related data of a specific passenger, with an RFID chip.

As will be discussed in more detail further below, more than one RFID communication unit may be present in some embodiments. Routines, in particular routines that are implemented on the airport DCS unit for the RFID communication also referred to as RFID communication routines. Furthermore, data may be exchanged with more than one RFID chip respectively type of RFID chips, particularly with boarding RFID chips and baggage RFID chips as also discussed further below. The one ore more RFID communication unit(s) may include one or more RFID reader(s) and/or RFID programmer(s).

A DCS in accordance with the present disclosure that comprises a central DCS unit and one ore more airport DCS unit as described before is also referred to as split DCS in the following.

For carrying out the central DCS routines, functional central DCS modules are present; similarly, for carrying out the airport DCS routines, functional airport DCS modules are present. A separate and dedicated functional central DCS module respectively functional airport DCS module may be provided for each of the central DCS routines respectively airport DCS routines and may be designed for executing the corresponding routine. Alternatively, however, a number of central DCS routines respectively airport DCS routines may be carried out by a common functional central DCS module respectively functional airport DCS module. Likewise, a single central airport DCS routine respectively airport DCS routine may involve a number of two or more functional units and execution may be shared between them. Both the central DCS unit and the airport DCS unit are typically realized as computerized devices or systems with one or (typically) a plurality of processors as well as associated components, such as memory, databases, mass storages, terminal devices and the like.

The central DCS unit communication interface and the airport DCS unit communication interface are typically designed for coupling via Internet, but may additionally or alternatively also be designed for coupling via any other wired or wireless network and communication technology that is capable of handling the required amount of data with sufficient reliability.

In an embodiment, the departure control system includes a plurality of airport DCS units. In a typical setup, an airline operates one central DCS unit that is located, like DCSs of the state of the art, in its data centre and, and further has an airport DCS unit at each airport it serves, with the single airport DCS units being separately operatively connected to the central DCS unit. Alternatively or additionally, however, and airline may operate a number of airport DCS units which are substantially independent from each other at the same airport. This may be the case for larger airports/hubs with a corresponding large number of flight-related data handling, and/or for backup purposes.

An airport DCS unit is, in contrast to the central DCS unit, in direct operational interaction with passengers, check-in counter personal, gate agents, and the like. An airport DCS unit accordingly typically comprises communication interfaces for operatively coupling with user interfaces/periphery devices, such as check-in counter terminals, self check-in kiosks, boarding pass printers, baggage tag printers, and the like. Typically, an airport DCS unit and its communication interfaces are designed for operatively coupling with a plurality of periphery devices as mentioned above, such as a plurality of check-in counter terminals and self check-in kiosks. Alternatively or additionally, however, an airport DCS unit may be realized integral with one or more periphery devices, in particular with a check-in counter terminal or a self check-in kiosk.

In an embodiment, the set of central DCS routines is at last in part different from the set of airport DCS routines. As a general rule, the central DCS routines include "high-level" routines that are common for all or at least some airports that are served by an airline and in particular routines that do not require on-site interaction with the counter agent or passenger.

Typical central DCS routines that are implemented exclusively on the central DCS unit of a split DCS include creating, changing and maintaining the general databases of the airline, in particular an aircraft database with relevant information of typically all aircrafts of an airline. A further central DCS routine that is not implemented on an airport DCS unit is a through check-in routine for through check-in of passengers and/or baggage. Further of such routines that are typically only implemented on the central DCS unit are check-in routines that are typically carried out remote from the departure airport, in particular mobile check-in and (Internet-based) online check-in routines.

Typical airport DCS routines that are not implemented on a central DCS unit but only on an airport DCS unit of a split DCS include regular counter and/or kiosk check-in routines in operative coupling with the counter terminal and/or a self check-in kiosk, handling of the local timetable of flights departing from the corresponding airport, passenger boarding routines, or baggage handling routines.

It is noted that different airport DCS units of different functionality, that is, with a set of at least partly different airport DCS routines, may be implemented on and executed by different airport DCS units that are located at the same and/or different airports. Furthermore, while most routines will typically be implemented only at a central DCS unit or an airport DCS unit, some overlap may exist between central DCS routines respectively airport DCS routines.

A split DCS architecture in accordance with the present invention generally reduces the data traffic between airports and remote data centres because at least some of the flight-related data of passengers and/or baggage can be handled locally, with no or little involvement of the central DCS unit and in particular with no or little requirement for real-time data exchange. Furthermore, since the amount of routines that is implemented on a central DCS unit respectively an airport DCS unit is reduced, each of them can be less complex, especially regarding the software and data processing power.

Furthermore, all tasks and routines that can be fully handled locally by an airport DCS unit can be executed even if the operational coupling to the associated central DCS unit is broken or unstable. Particularly regular counter check-in, self check-in, and boarding prior to the departure of an aircraft can be carried out and completed smoothly even without operational coupling to the associated central DCS unit. Whenever operative coupling between the central DCS unit and an airport DCS unit is present, however, which would normally be the case most of the time, data are transmitted and synchronize between the central DCS unit and airport DCS unit or airport DCS units substantially continuously and in real time.

The reduced complexity of a central DCS unit as compared to a present full-fledged DCS further allows an airline to operate several central DCS units, e. g. in different countries, in an economic way. This is particularly favourable in view of potentially different regulatory and legal circumstances, different data handling, security, and protection of data privacy requirements.

The at least one airport DCS unit includes an RFID communication unit which implements an RFID communication routine as airport DCS routine. The RFID communication routine includes exchanging flight-related data, in particular flight-related data of a specific passenger, with an RFID chip. Storing and processing some or favourably all data that are related to the check-in and boarding of a passenger and/or the baggage handling via RFID technology allows a variety of typical airport routines to be carried out in a faster and smoother way, simultaneously reducing or fully avoiding the number of potential faults and mistakes, as will be explained further below in more detail.

As will further become apparent, the amount of paper that needs to be printed, handled, and subsequently discarded especially for boarding passes and baggage tags, is typically not fully avoided, but can be reduced. However, exclusively relying on RFID technology for the check-in, boarding, and baggage handling is in principle possible. Typically, routines that are related to RFID communication, such as writing information into and/or reading information from an RFID chip are airport DCS routines that are implemented only on airport DCS units, but not on the associated central DCS unit. According to an embodiment of a system for handling RFID boarding and/or baggage passes according to the present invention, handling is carried out by the airport DCS, then in particular acting as a slave server. Alternatively and/or additionally, all actions and/or data logs are archived on a master server of the central DCS.

In an embodiment, a number of RFID communication units and/or different RFID communication routines is present as will be discussed further below.

In an embodiment, the at least one airport DCS unit is configured to associate the specific passenger with a passenger identification code, the passenger identification code being-pre-stored on an RFID chip. A corresponding routine that includes associating the specific passenger with a passenger identification code is referred to as "RFID check-in routine" which is implemented and can be executed by the airport DCS unit.

For this type of embodiment, an airline or airport has a pool with a plurality of RFID chips that are typically attached to or integrated into an e. g. credit card like carrier. For a correspondingly equipped airport, all routines that are related to check-in, baggage drop, and boarding can be handled via the RFID chip without relying on paper. An RFID chip carrying a pre-stored passenger identification code is in the following also referred to as "boarding RFID chip" and the corresponding carrier which carries or includes such a chip is referred to as "RFID boarding pass". Favourably, the boarding RFID chip is a read-only RFID chip which, once programmed with a passenger identification code, can only be read, but not allow changing or adding further data.

According to a typical embodiment, the passenger identification code is not permanently linked to a specific passenger and/or a specific flight, but to an airport or airline. As explained in more detail further below, the association between a passenger identification code and a specific passenger/specific flight is stored by the airport DCS unit and is only temporary and accordingly non-permanent. As already stated above, all actions and/or data logs may additionally be stored at the central DCS preferably acting as a master server.

The well-known step of printing a boarding pass is, when using an RFID boarding pass as described, supplemented and potentially replaced by associating the specific passenger and particularly the boarding data of this specific passenger with the passenger identification code of an RFID boarding chip. The RFID boarding card with this RFID boarding chip is handed to the passenger. Handing the RFID boarding pass to the passenger may be carried out manually e. g. by a counter agent. Alternatively, the airport DCS unit may comprise or be operatively coupled with an RFID boarding pass output unit that stores a plurality of RFID boarding passes e. g. in a magazine and provides the RFID boarding pass to the passenger subsequent to the data association as explained before.

An RFID boarding pass is generally valid only at a specific airport and in combination with a specific airport DCS unit or set of airport DCS units of an airline and does typically not leave the airport. As discussed further below in more detail, the passenger does especially not carry the RFID boarding pass when boarding the airplane.

The association of the passenger identification code and a specific passenger is stored only by the airport DCS unit. Favourably, this association is permanently deleted once it is not required anymore because the passenger has boarded, has changed the flight, the flight is cancelled, or the like. In any case, the specific passenger can not be identified by means of the information that is stored on the boarding RFID chip without access to the corresponding association as stored by the DCS. Therefore, lost or stolen RFID boarding passes are uncritical and the privacy of personal data is maintained.

Alternatively to checking in via a regular check-in counter with a counter agent, many passengers tend to check in using a self check-in kiosk. To enable kiosk check-in in combination with an RFID boarding pass, an RFID the self check-in kiosk may comprise or operatively couple to an RFID boarding pass output unit as explained before.

In a further variant, passengers do self check-in via Internet. As mentioned before, Internet-based check-in is favourably generally handled by the central DCS unit. To enable boarding with an RFID boarding pass, such boarding pass accordingly has to be handed to the passenger at the departure airport. For this purpose, RFID boarding pass output units may be present that provide an RFID boarding pass to a passenger after the identity and status of the passenger being entered into the RFID boarding pass output unit or being read by the RFID boarding pass output unit via a barcode reader or the like. While such RFID boarding pass output units may be dedicated devices similar to the self check-in kiosk, self check-in kiosks with an RFID boarding pass output unit as mentioned before may also be designed for this additional purpose.

As long as a passenger is only booked for a direct flight without intermediate stops at further airports (through checking), no paper-based boarding pass is generally required. Favourably, however, a paper-based boarding pass is additionally printed and provided to the passenger as backup and to help the passenger memorizes the relevant flight data, such as boarding time, terminal, and gate. In particular when handing out RFID boarding passes for point-to-point flights, the paper-based boarding pass, which may then merely have the size of a receipt or coupon, may be used by the passengers for financial documentation and proof for a valid reservation of a particular seat in the aeroplane. While not being essential, such paper-based boarding pass may also carry a machine-readable code, such as a barcode, e.g. a barcode according to the IATA standard. Since the paper-based boarding pass is generally not used, it is favourably smaller than present standardized boarding passes and may, e. g., have one third of the size of the present standardized boarding pass. Thereby, the amount of paper that needs to be printed and subsequently discarded is considerably reduced. Instead of a paper-based boarding pass, "virtual" boarding passes are known and widely used that carry the required data in machine-readable graphical form, e. g. as (one-dimensional) bar code or (two-dimensional) data matrix. Such virtual boarding pass is typically directly transmitted to a personal device, e. g. a smart phone, of a passenger. Boarding passes that store information in a graphical form, are, independent whether they are paper-based or virtual as explained before, also referred to as "graphical boarding passes" in the following, as opposed to RFID boarding passes.

For a system in accordance with the before-described embodiments where an RFID boarding pass is used only at a specific airport, additional routines and functions are favourably provided for transfer handling.

If a passenger takes a flight from a first departure airport that is equipped with RFID technology in accordance with the present disclosure with subsequent transfer at one or more transfer airports to the final destination (through checking), an RFID boarding pass as explained before is associated with the passenger and handed to the passenger for use at the first departure airport. Subsequent connection flights are favourably handled by the airport DCS unit in a conventional way. In particular, a paper-based boarding pass is favourably printed for each connection flight which may be used at the corresponding departure airport(s) of the connection flight(s) in a conventional way.

The RFID check-in routine favourably includes an RFID transfer check-in routine for associating an RFID chip with a passenger and providing the corresponding RFID boarding pass to the passenger in the above-described way (either at a kiosk or at a counter with counter agent) upon presentation of a graphical boarding pass. This option is particularly useful if an airline uses RFID check-in at a transfer airport. The transfer passenger can simply present the conventional graphical boarding pass (which he/she received at the preceding departure airport, printed himself/herself, downloaded to a cell phone, or the like) and receive the RFID boarding pass.

Since an RFID boarding chip and RFID boarding pass is used locally at a specific airport only, it is irrelevant whether or not a specific airline relies on the use of RFID technology at a specific airport that may serve as transfer airport. Furthermore, different airports/airlines may rely on different and potentially fully or partly incompatible RFID technologies.

It is particularly noted that, while the handling of an RFID boarding pass is similar to the handling of a graphical boarding pass according to the state of the art and similar procedures are involved from the passenger's point of view, there is a fundamental technical difference: while a regular boarding pass is valid for a specific passenger and a specific flight only and carries passenger and flight specific information, the RFID chip of an RFID boarding pass does not carry any passenger-specific information. No information is written or programmed into the RFID chip at the check-in, but only information, namely the passenger identification code, is red from the RFID chip.

In an embodiment, the at least one airport DCS unit includes or is operatively coupled to a boarding RFID reader and is further configured to read the passenger identification code that is stored on an RFID chip which is presented to the boarding RFID reader. The airport DCS unit of such embodiment is further configured to change a passenger status in response to reading the passenger identification code. Favourably, such airport DCS unit is further configured to cancel the association of the corresponding specific passenger with the passenger identification code. Favourably, such airport DCS unit is further configured to determine whether the specific passenger has validly checked in for a flight he/she wishes to board and changes the passengers status only if valid boarding is confirmed. Particularly, the passenger status may be changed to "boarded". Cancelling the association between a specific passenger and an RFID boarding pass respectively passenger identification code is favourably carried out directly when it is not longer required, that is, when the passenger has boarded, e. g. along with changing the passenger status. Alternatively, the association may persist in the airport DCS unit until it is, e. g., replaced by a new association for a new passenger.

The passenger presents his/her RFID boarding pass to the boarding RFID reader in a similar way as a graphical boarding pass, thus indicating to the DCS that the corresponding passenger has validly boarded. This information is subsequently handled in the same way as according to the state of the art. Cancelling the association between passenger and identification code is an optional step that is favourably carried out for safety and privacy reasons and further in view of re-used of the RFID boarding pass for a further passenger as discussed in more detail below. Cancelling the association may be carried out immediately when the RFID boarding pass is presented to the boarding RFID reader or may be carried out subsequently in a later step.

In an embodiment, the at least one airport DCS unit includes or is operatively coupled to an RFID collecting unit. The RFID collecting unit is configured to physically collect RFID chips respectively RFID boarding passes carrying passenger identification codes.

Collecting the RFID boarding passes is favourably carried out immediately prior to a passenger boarding. An RFID collecting unit may accordingly be integral with or arranged in proximity to a boarding RFID reader as mentioned before. In embodiments where the RFID boarding pass has a design substantially corresponding to a credit card, the RFID boarding pass collecting unit may have an insertion slot like, e. g., in a cash machine. Favourably, the boarding RFID reader is arranged such that the information stored on the RFID chip, particularly the passenger identification code, is red automatically upon insertion into the insertion slot. Furthermore, an airport DCS unit may be configured to cancel the association of the corresponding specific passenger with the passenger identification code that is stored on the boarding RFID chip of a collected RFID boarding pass.

In an embodiment, the at least one airport DCS unit is configured, subsequent to associating the specific passenger with the passenger identification code, to associate a further specific passenger, the further specific passenger being different from the specific passenger, with the same passenger identification code.

This type of embodiment allows the reuse of RFID boarding passes for a further passenger. This type of embodiment is particularly favourable in connection with partly or fully automated RFID collecting units as discussed before. In principle, however, collecting and returning the RFID boarding passes to the pool of RFID boarding passes can also be done manually, e. g. at smaller airports. At any point in time, however, only a single passenger can favourably be associated with a given passenger identification code.

For this type of embodiment, RFID boarding passed can be reused may times and up to several thousand cycles. A limit is given only by the wear of the RFID boarding passes.

In an embodiment, the at least one airport DCS unit is configured to associate a passenger with a passenger with a passenger identification code only if no passenger is associated with this passenger identification code. In this way, any double-assignment is prevented.

In an embodiment, the at least one airport DCS unit includes or is operatively coupled to a barrier unit, wherein the at least one airport DCS unit is configured to control the barrier unit to unblock if the passenger identification code that is stored on an RFID chip presented to a barrier RFID reader is associated with a validly checked-in passenger. The barrier RFID reader is part of or operatively coupled to the barrier unit.

The barrier unit may, e. g., be a self boarding unit which is passed by the passengers immediately prior to boarding. A barrier unit according to this type of embodiment accordingly operates in the same way as self boarding units with a barrier according to the state of the art. Instead of a graphical boarding pass, however, an RFID boarding pass is presented.

If the barrier unit is a self boarding unit, it favourably comprises or is coupled to the RFID collecting unit as explained before. For this type of embodiment, the barrier RFID reader operates, at the same time, as boarding RFID reader. For this type of embodiment, the barrier RFID reader is further favourably coupled to or integral with an RFID collecting unit as described above.

If the barrier unit is part of a boarding pass checking unit as typically present between the public area and the security area of an airport, no RFID collecting unit is typically present since the RFID boarding pass is subsequently required for boarding.

It is noted, that, in a specific installation, both of the above-mentioned types of barrier units may and typically will be present. Furthermore, such barrier units may be present at any desired location at the airport.

In an embodiment, the at least one airport DCS unit includes or is operatively coupled to a passenger location unit. The passenger location unit is configured to receive a passenger identification input indicative of a specific passenger to be located. The passenger location unit includes a number of RFID communication units. Each of the RFID communication units is associated with a corresponding airport section. The passenger location unit is further configured to determine an airport section in which an RFID chip with data that are associated with the specific passenger is located, and to provide an indication with respect to this airport section.

Especially every larger airport faces the problem that passengers that are validly checked in for a flight do not show up at the gate for boarding in time. At present, such passengers are typically publicly announced which is not successful in a number of cases. In addition to the passenger missing the flight, passengers that do not show up cause significant amount of additional effort at the airport and for the airline, potentially even resulting in a flight being delayed. E. g., such passengers have to be removed from the passenger list, their baggage must be removed and typically they have to be booked for later flight.

RFID boarding passes in accordance with the present disclosure may in a favourable way be used for locating a passenger who is missed for boarding. In accordance with this type of embodiment, the passenger identification code that is associated with a passenger who has not boarded at a given (latest) boarding time, is transmitted to the passenger identification unit and/or the passenger identification unit checks the boarding status of all passengers for a specific flight at or shortly after the given (latest) boarding time. The passenger identification number of the passenger to be located is broadcast via the antennas of the RFID communication units. If the boarding RFID chip with this passenger identification code receives such signal, it responds by broadcasting confirmation signal, e. g. the stored passenger identification code.

Once the passenger is located to be in an airport section of limited size, he or she can be announced in this area and potentially neighbouring areas by an airline or airport agent and asked to proceed to the gate. The size of the single airport sections is favourably sufficiently small to enable a passenger within such airport section to be reliably and easily contacted, with an area of 200 m² per airport section being a typical but non-limiting value.

While not being mandatory, this type of embodiment operates best with active boarding RFID chips in view of the larger communication range of active RFID chips. In general, however, the boarding RFID chip on an RFID boarding passes may be active or passive or both active and passive RFID chips may be used.

The airport sections in which a passenger may be located may have some overlap and favourably cover all areas of an airport where the need for locating a passenger may occur. They do not necessarily cover the whole airport but may be limited, e. g. to terminal buildings. If desirable, more than one passenger localisation unit may be foreseen, e. g. one per terminal building in a larger airport.

In an embodiment, all RFID communication units of a passenger location unit are activated to broadcast the passenger identification code of a passenger to be located simultaneously. Alternatively, the passenger identification unit may be configured to first activate a subset of RFID communication units and to activate one or more further subsets of RFID communication units only if the corresponding passenger respectively the corresponding RFID chip can not be located in the airport sections corresponding to the first subset. The passenger identification unit may accordingly be pre-programmed with a number of different subsets of RFID communication units respectively airport sections that are associated with different probabilities of the passenger presence, or such probabilities may be determined automatically by the passenger location unit. RFID communication units or subsets of RFID communication units are favourably activated in an order of decreasing probability, starting with the highest probability. By way of example, a first subset that is activated first may include a duty free shop, a second subset may include a business launch (if the passenger to be located has a corresponding ticket), and a third subset may include other and/or more remote areas of the airport, e. g. further terminal buildings and inter-terminal transfer shuttles.

In an embodiment, the at least one airport DCS unit is configured to determine if an overweight surcharge is due for a specific piece of baggage of a specific passenger and to associate this specific passenger with a passenger identification code of a boarding RFID chip and/or print a boarding pass only after payment of the overweight surcharge. The payment of any overweight surcharge is accordingly not left to the discretion of the agents but necessarily follows the airline policy.

Most airlines generally follow some policy regarding the baggage weight that is free of chare and require an overweight surcharge to be paid if the baggage weight exceeds a pre-defined limit weight. In practice, however, it is known that the policy is not always followed because a number of counter agents tends to accept overweight baggage without requesting or enforcing the payment of an overweight surcharge. For this type of embodiment, the airport DCS unit includes or is operatively coupled to a baggage scale, which may, as it is the case according to the state of the art, be part of a baggage drop unit of a check-in counter. Favourably, the overweight surcharge is automatically computed in accordance with the airline baggage policy respective fees schedule, and is displayed to the counter agent.

It is noted that the coupling of boarding pass printing and overweight surcharge payment may be used in combination with DCSs in accordance with the present invention, but may also be used in combination wit a DCS, check-in counters and baggage drop unit according to the state of the art. For this purpose, a check-in counter or check-in-terminal or a baggage drop unit is provided that comprises a baggage scale, the baggage scale being operatively coupled with the check-in counter or check-in terminal and/or a DCS. The DCS, the check-in counter or terminal and/or the baggage drop unit is configured to determine if an overweight surcharge is due for a specific piece of baggage of a specific passenger and to print a boarding pass only after payment of the overweight surcharge.

In an embodiment, the flight-related data include baggage identification data. The baggage identification data are indicative for a specific piece of baggage and a specific flight. The RFID communication unit of such embodiment includes an RFID programmer, and the at least one airport DCS unit is configured to program the baggage identification data into an RFID chip. The RFID chip is associated with the piece of baggage and is in the following referred to as "baggage RFID chip". The data that may be programmed into baggage RFID chips are favourably in accordance with the corresponding IATA standards.

For typical travellers' baggage, e. g. suitcases, at least one baggage RFID chip is favourably directly integrated or permanently attached to the piece of baggage. While not being essential, a number of, e. g., three baggage RFID chip is favourably present at different sides of the baggage and the RFID programmer is configured to program the identical baggage identification data into each of them, thus allowing the data to be subsequently read out for any orientation of the piece baggage with respect to an RFID reader. For luggage from leather or plastic, the baggage RFID chip(s) may be arranged on the inside of the piece of baggage or integrated into the shell, e. g. between an outer leather layer and an inner lining layer. For metal baggage, the baggage RFID chip(s) are favourably arranged at the outside of the piece of baggage because of the electromagnetic shielding properties of typically used metals.

According to the present invention, the usage of a single RFID chip for per piece baggage or luggage may be sufficient. The system according to the present invention may therefore only use a first of a number of RFID chips integrated into or attached to a certain piece of baggage. Baggage identification data may be written onto the first RFID chip identified on the baggage. Alternatively or additionally, the usage of RFID chips may also be restricted to authorised RFID chips. The authorisation of the RFID chips may be managed in a respective data base containing RFID chip identification data, such as chip numbers, etc. In a method and system according to the present invention, then only authorised RFID chips will be accepted. On the one hand, this enables to prevent the usage of faked or copied RFID chips. On the other hand, the system may check, whether a certain piece of baggage luggage is not authorised for travel because of being identified as stolen or missed or alike.

For single-use luggage, such as single-use card box shipping boxes, dedicated baggage RFID tags with a baggage RFID chips may be provided. Alternatively, printed baggage tags with barcode may be used in this case. The same holds true if the destination airport is not equipped with RFID-based baggage handling capabilities.

Further baggage handling equipment, such as conveying and transportation systems and/or sorting rooms of an airport may include baggage RFID readers for reading the information stored in baggage RFID chips. It is noted that providing the baggage handling equipment with corresponding RFID readers - in addition to and/or as replacement for present bar code readers - is the only modification that is required to such baggage handling equipment that is typically part of the general technical airport infrastructure.

Providing baggage with baggage RFID chips as discussed before and providing the airport infrastructure with corresponding RFID readers is also favourably in the context of stolen baggage. If a piece of baggage that is quipped with a baggage RFID chip as explained before is reported as stolen, the unique RFID chip number that is typically stored by an RFID chip may be recorded in a "stolen baggage database". Whenever baggage identification data shall be stored into a baggage RFID chip as explained before or - more generally - whenever data from a baggage RFID chip are read by an RFID reader of the airport infrastructure, the unique RFID chip number may be checked against such database. If the RFID chip number is present in such data base, a corresponding information may be provided e. g. to the airport police or other competent authorities. A stolen and/or missed baggage database may be local and stored by the airport DCS unit, may be stored by the central DCS unit, or may by global and exchanged, e. g. with DCSs of further airlines.

Alternatively or additionally, a stolen baggage database is stored at the central DCS which then preferably acts as a master server. Storing such data may be restricted to the central DCS. The data may be synchronised between all master servers or any global database. As an airport DCS relates to a current airport only, the airport DCS can assess during check-in then acting as a slave server, whether a certain RFID chip identification data, such as the chip number, is registered as stolen or missing in the database of the respective master server. This enables to globally manage theft and/or loss information for baggage.

In contrast to boarding RFID chips as discussed before, baggage RFID chips are favourably recordable RFID chips into which flight-related data for a plurality of up to thousands of flights can be programmed. For data protection and data privacy reasons, however, the data related to a flight are favourably cancelled or marked unreadable as soon as not longer required. For this purpose, the airport DCS unit and/or the RFID programmer may be configured to delete stored data, in particular baggage identification data originating from a previous flight, when presenting the baggage to the RFID programmer for programming baggage identification data of a subsequent flight. Alternatively, such data may be marked as unreadable rather than actually deleted. Similarly, RFID programmers may be provided for this purpose, in an airport section or a passenger that is passed by a passenger after baggage claim, e. g. at the exit of the baggage claim area. This type of embodiment provides a particularly high level of data protection and data privacy if both the departure airport and the arrival airport are correspondingly equipped.

In some embodiment, an airport DCS unit of a split DCS includes or is operationally coupled to a weight checking unit, the weight checking unit including a baggage scale and a baggage RFID reader and/or baggage barcode reader. Such weight checking unit is favourably located in the baggage flow after the check-in, e. g. in a sorting room where the baggage is sorted and compiled for the individual departing flights, and in any case at a point prior to the baggage being transported to the airport. The weight checking unit is configured to check whether the weight of a piece of baggage is in accordance with the baggage policy of an airline and particularly to check whether a due overweight surcharge has been paid. The weight checking unit is configured to pass a piece of baggage only if such conditions are fulfilled and to sort it out otherwise for new check-in. Such weight-checking unit may be present in addition to a system that allows check-in only if a due overweight-surcharge has been paid as described above for double-checking purposes, or may be present independently.

In an embodiment, the at least one airport DCS unit is designed to operate in a connected mode if operative connection with the central DCS unit is present and is further designed to alternatively operate in an autonomous mode if operative connection with the central DCS unit is not present. The at least one airport DCS unit is designed, in the connected mode, to locally store flight-related data and to synchronize the locally stored flight-related data with flight-related data stored by the central DCS unit. The at least one airport DCS units is further designed, in the autonomous mode, to operate as DCS temporarily independent from the central DCS unit.

In the connected mode, synchronisation is favourably carried out on a continuous or quasi-continuous basis. That is, whenever new or updated relevant data are present on the central DCS unit and/or an airport DCS unit, they are transmitted to the other of the central DCS unit and airport DCS unit, respectively, which update their stored data respectively database accordingly. It is noted that data relating to a particular flight are favourably not synchronized with all connected airport DCS units at all airports, but only with one or more airport DCS units that is/are installed at the departure airport of this flight.

In some embodiments, an airport DCS unit is adapted, upon a previously temporarily interrupted operative coupling with the central DCS unit being restored, to transmit data that is stored by the airport DCS unit to the central DCS unit.

Via this transmission, the central DCS unit is synchronised with an airport DCS unit (also referred to as "back-synchronization" in the following). Such back-synchronisation may be carried out automatically. For this purpose, an airport DCS unit and/or the central DCS unit may be adapted to automatically detect if the operative coupling between an airport DCS unit and the central DCS unit is restored and trigger the back-synchronisation in this case. Alternatively or additionally, the back-synchronisation may be triggered manually.

When boarding is closed and prior to the flight departure, relevant data, in particular passenger-related data, are today often transmitted from an airline DCS to the arrival airport. In an architecture in accordance with the present disclosure such data would typically be transmitted by the central DCS unit. In some embodiments, however, an airport DCS unit is adapted to establish operational communication with an arrival airport and to transmit flight relevant data to the arrival airport if operative coupling to central DCS unit is interrupted when boarding is closed. This type of embodiment ensures that the arrival airport receives complete and up-to-data data in time even in case of a communication interruption between central DCS unit and airport DCS unit. Transmitting the relevant data from an airport DCS unit to the destination airport allows the flight to take off in time even if the connection to the central DCS unit is interrupted.

In some embodiments, an airport DCS unit is particularly configured to handle and process Passenger Name Lists (PNLs) and/or Additional Deleting Lists (ADLs) and is designed to temporarily operate as DCS independent from the central DCS unit.

As explained before, a DCS generally belongs to a particular airline and manages flight data and flights of this airline. Especially third-party DCS belong to airlines. Airport DCS and central DCS belong to certain airport and/or flight management service providers. The present invention enables to connect any of these DCS via the self-organising remote procedure call protocol. Thus, all DCS may be integrated into a split DCS system. The embodiments and application scenarios as described so far are based on the general assumption that all flight segments, including potential stopovers, are generally managed by a split DCS in accordance with the present disclosure, particularly by a split DCS. This, however, is not necessarily the case. In some typical application scenarios, only some fight segments, e. g. the first flight segment of a multi-segment flight, is executed by an airline using a split DCS, while some or all other flight segments are executed by airlines using a different DCS, e. g. a DCS in accordance with the state of the art. Furthermore, an airline using a DCS in accordance with the state of the art that is not designed for RFID data exchange, may anyway whish to rely on RFID boarding passes and/or RFID baggage tags as explained before if such technology is used by a partner airline.

In some embodiments, the central DCS unit of a split DCS in accordance with the present disclosure is configured to operatively couple to a further external DSC and/or an external reservation system and to exchange data with and particularly receive data from the external DCS and/or external reservation system. In the following, reference is mainly made in this context to an external DCS. An analogue approach, however, may also be used for another external reservation system which is not a DCS.

An external DCS is, e. g., a DCS belonging to a partner airline and may in principle be a split DCS in accordance with the present disclosure, but is more typically a DCS according to the state of the art as widely used by airlines. The central DCS unit is configured to operatively couple with the external DCS via the central CDS unit communication interface or via a separate communication interface, using, e. g., an internet-based communication channel. An airport DCS unit may accordingly exchange data with an external DCS via the central DCS unit. However, no direct communication channel is provided between an airport DCS unit and an external DCS in typical embodiments.

Operatively coupling a DCS in accordance with the present disclosure with an external DCS is particularly favourably since it allows making use of the advantages and features that are related with an RFID chip storing flight-related data as explained above as well as further below also in combination with a DCS according to the state of the art. No modification is required on such external DCS. According to this type of embodiment, flight-related data are transmitted from the external DCS to the central DCS unit and are further transmitted from the central DCS unit to a corresponding airport DCS unit of the departure airport. The data protocols and communication standards are not necessarily identical for the communication between the external DCS and the central DCS unit on the one hand and between the central DCS unit and the airport DCS units un the other hand. Data exchange or communication between the central DCS unit and the airport DCS units, i. e., communication between the units of a split DCS in accordance with the present disclosure, may especially be based on a proprietary protocol, while data exchange or communication between an external DCS and the central DCS unit may be based on an available and generally accepted standard, in particular SITA (Société Internationale de Télécommunications Aéronautiques) standard. Data that may be communicated from an external DCS to the central DCS unit and further from the central DCS unit to an airport DCS unit may particularly include PNLs (Passenger Name Lists) and/or ADLs (Add/Delete Lists). A PNL is typically transmitted some time before the regular check-in is opened. ADLs with last minute changes may also be transmitted later on.

For through checking, a split DCS in operative coupling with an external DCS is favourably designed and configured to print out boarding passes for the various flight segments based on the PNLs and ADLs as provided by an external DCS managing a flight. In this way, the external DCS and its data base or data bases remain the central instances where all data are consolidated and data consistency is ensured, even if airport check-in is carried out via the split DCS.

A further advantage of this type of embodiment is that a common terminal hardware and a common user interface may be used on the airport side independent of whether a flight is generally managed by the DCS in accordance with the present disclosure or by a coupled external DCS.

For this type of embodiment, online as well as mobile check-are carried out by passengers by directly accessing the external DCS which transmits the corresponding data to the central unit, typically as PNL/ADL as explained above. Favourably, check-in via the external DCS is disabled upon or somewhat before start of the airport check-in. In general, check-in can only be started for an external flight handled by an external DCS is the flight status for such a third-party DCS is set to "flight open" (FO). While not being essential, this safety measure ensures any potential database inconsistency in case of a temporary communication interruption or communication breakdown between the external DCS and the central DCS unit respectively between the central DCS unit and a local DCS unit during airport-check-in.

Check-in at a regular check-in counter with a counter agent or self check-in at a check-in kiosk are carried out via the split DCS, particularly its airport DCS unit, in exactly the same way independent of whether a flight is generally managed by the split DCS in accordance with the present invention or a coupled external DCS. The same holds true for baggage drop and boarding.

As explained before, an airport DCS unit in accordance with the present disclosure is adapted, upon a previously temporarily interrupted operative coupling with the central DCS unit being restored, to transmit data that is stored by the airport DCS unit to the central DCS unit. This functionality may be available in the same way for embodiments where an external DCS is operatively coupled to the central DCS unit. That is, if a flight is generally managed via an external DCS and a communication interruption occurs during check-in/baggage drop at the airport, relevant data are temporarily stored by the airport DCS unit and transmitted, via the central DCS unit, to the external DCS upon coupling being restored.

In case of temporary communication interruption between the central DCS unit an external DCS, relevant data are temporarily stored by the central DCS unit and are transmitted to the external DCS upon communication being restored. During regular operation, if all communication channels are operable, flight-related data, in particular passenger and baggage data may transmitted form the central DCS unit to the external DCS in real time upon such data being generated or modified, or may be transmitted only after boarding has closed or subsequent to the flight departure.

A DCS architecture in accordance with the present invention with a split between central DCS unit(s) and airport DCS unit(s) is further favourable in the context of specific regulatory and/or general legal requirements of individual countries/jurisdictions. Such requirements may be posed by Aviation or other authorities. E. g., a number of countries require airlines to store flight-related data regarding their citizens inside the corresponding countries. Under such circumstances, different central DCS units may be provided in different countries/jurisdiction by the same airline, each central DCS unit storing flight-related data in accordance with the local requirements. The different central DCS units may be operatively coupled to exchange flight-related data between them as required. Furthermore, airport DCS units that are installed at a specific airport may be designed to couple to a number of central DCS units that are installed and operated in different countries.

In accordance with the present disclosure, a counter (typically a check-in counter or a self-check-in kiosk) may optionally include an image capturing device. The counter is part of or operatively connected to, e. g., an airport DCS unit of a split DCS. The image capturing device may include a still or video camera for capturing a portrait image of an air passenger and/or a scanning device for scanning a passport photograph form a passport, identity card, or the like of an air passenger. An airport DCS unit of such embodiment is further configured to temporarily store captured images of a passenger. For this type of embodiment, an image of an air passenger is captured in the process of check-in or self check-in, particularly in the context of providing a RFID and/or graphical boarding pass. Further for this type of embodiment, a barrier unit may be designed to display, after identifying a passenger by reading a passenger identification code from a boarding RFID chip via an RFID reader or reading information provided on a graphical boarding pass via a scanner, the corresponding previously captured passport photograph of this passenger on a display device, e. g. on a computer monitor. The barrier unit may further be designed to open, thereby allowing the passenger to pass, only after receiving an identity confirmation input, the identity confirmation input confirming identity of the person presenting the boarding pass with the passport photograph. Such identity confirmation input may be provided manually, e. g. by a counter agent, airport security officer, or the like. Alternatively or additionally, the barrier unit may include or be coupled to a further image capturing device at the barrier unit that is configured to capture an image of a passenger and compare it with a previously captured image via computer-implemented image processing/image comparison. Alternatively or additionally, an image of an ID or passport of a certain passenger captured at check-in time may merely be compared to the appearance of the passenger at the boarding gate or via a gate monitor by airport staff personnel. After boarding, all captured images are favourably automatically deleted from the airport DCS unit. Alternatively, however, they may be further stored or transferred to a further database, such as a "Flown" database, if desired by the airline and compliant with applicable data privacy regulations.

The before-described type of embodiment has the particular advantage that it allows to ensure that a person actually boarding a plane as passenger is identical to person that checked in. It can accordingly prevented that a boarding pass is illegally handed over to a different person or is, e. g., mistakenly confused. According to the state of the art, such check can only be achieved via time-consuming manual comparison and verification between the data of a identification document, such as a passport, and the printed data on the boarding pass.

In some embodiments, the DCS comprises a passenger identification unit. The passenger identification unit according to this type of embodiment may be implemented on the central DCS unit or an airport DCS unit of a split DCS in accordance with the present invention. In principle, it may also be implemented on any other DCS that is generally designed according to the state of the art. The passenger identification unit allows to check passenger identification data against a search database and provides an indication if the passenger identification data for a specific passenger match data that are present in the search database, making it likely that the passenger is a person with an entry in the search database. The passenger identification data are data sets with data that generally need to be provided by an air passenger, such as name, sex, date/place of birth, citizenship. The search database may, e. g., be a database of wanted persons, a database of persons with restricted freedom to travel, such as tax debtors, or a "no flight" database of persons that shall not be allowed to enter a plane according to an airline policy, e. g. because of previous incidents with that passenger. The passenger identification data may be provided, e. g., in form of a PNL and/or ADL as discussed above, from a GDS (Global Distribution System) or an APIS (Advance Passenger Information System) as known in the art and widely used. The passenger identification unit is configured to transmit received or inputted passenger identification data or data sets to the search data base and receives a hit notification from the search database in case of a hit. For this case, the passenger identification unit is further configured to send a hit notification to an external IT system, such as a police or customs IT system to which it is operatively connected. For example., if a specific person that is present in a database of wanted persons appears on the PNL of a flight, a corresponding hit notification may be sent to the airport police of the arrival airport which may, in turn, decide on any actions to be taken. If the person is on a "no flight" database, check-in or boarding may be permitted.

In preferred embodiments, a passenger identification unit does not only provide the exact passenger identification data to the search database, but is configured to determine modified data that show some deviation to the provided passenger identification data but anyway have a reasonable likelihood of corresponding to a specific person. Particularly, IATA standards are comparatively tolerant with respect to name misspellings and accept a number of characters to deviate between, e. g., the name as provided by a passenger e. g. during self check-in or as entered by a counter agent, and the name as indicated by an ID or passport. The passenger identification unit may accordingly be configured to determine, based on the provided or inputted passenger identification data, alternative data sets with alternative data that take into account deviations such as misspellings, and transmit such alternative data to the search database in addition to the original passenger identification data.

It is noted that for a passenger identification unit as explained before, the DCS and particularly the DCS do typically neither host nor have full access to the search database which is hosted, operated and maintained under control of the corresponding authority. In some cases, however, the search database may be an airplane data base and be hosted by the DCS. This may be the case, e. g., for a "no flight" database.

It is further noted that an optional passenger identification unit as explained before is particularly useful in an avian context, but may also be valuable in a different context and applied in an analogue way. It may, for example, be used to provide an information if a person that is present in a search data base tries to enter means of transportation, e.g. a cross boarder train, a cross boarder bus.

According to a further aspect, the overall object is achieved by providing a passenger location unit. The passenger location unit is, in an operational state, arranged at or in an airport. The passenger location unit includes a number of RFID communication units and each of the RFID communication units is associated with a corresponding airport section. The passenger location unit is further configured to receive a passenger identification input indicative of a specific passenger to be located. The passenger location unit is further to determine an airport section in which an RFID chip with data that are associated with the specific passenger to be located is located, and to provide an indication with respect to this airport section.

The passenger location unit may designed and operate according to any embodiment as discussed above and further below in context of an airport DCS unit.

### BRIEF DESCRIPTION OF FIGURES

- Figure 1: shows an exemplary departure control system along with periphery components in a schematic functional view;
- Figure 2: shows an exemplary check-in counter in a schematic functional view;
- Figure 3: shows an exemplary setup with a passenger location unit in a schematic functional view.

### EXEPMPLARY EMBODIMETS

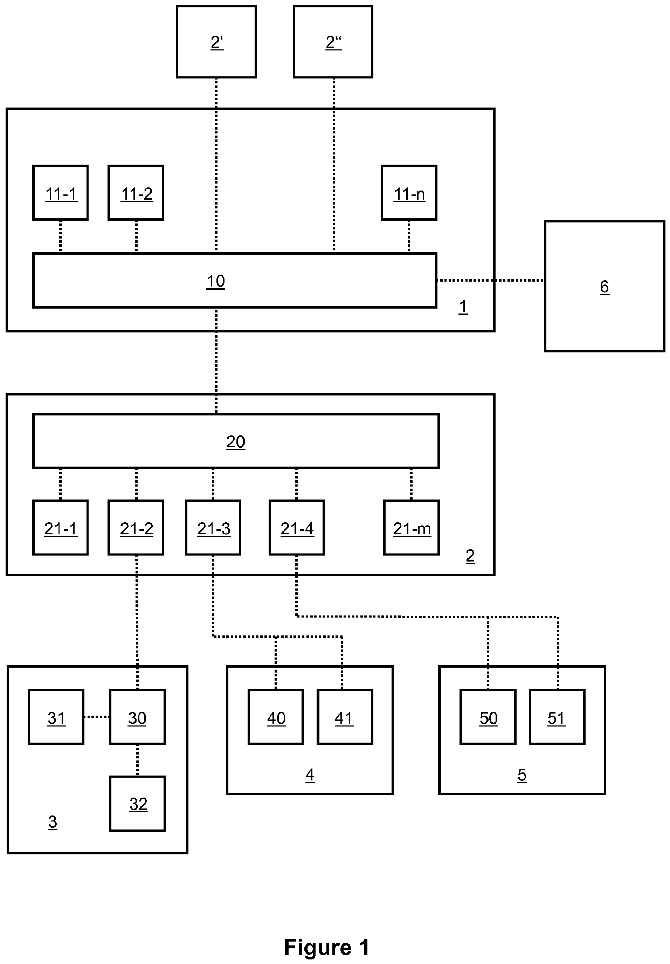

In the following, reference is first made to figure 1. Figure 1 shows a departure control system in accordance with the present disclosure together with periphery components in a schematic functional view. Functional operational couplings between individual units and components are, like in subsequent figures, indicated by dotted lines. Those couplings are unidirectional and/or bidirectional information exchange couplings that are based on wired and/or wireless technologies and hardware and/or software protocols as generally known in the art.

The DCS includes a central DCS unit 1 and an airport DCS unit 2. The central DCS unit 1 is typically located at a data centre of an airline. The airport DCS unit 2 is typically installed remote from the central DCS unit 1 at an airport.

The arrangement as shown in figure 1 further includes a check-in counter 3, a boarding pass checking unit 4 and a self boarding unit 5, each of them comprising a barrier unit as explained further below in more detail. The check-in counter 3 and the barrier units 4, 5 are typically installed at the same airport as the airport DCS unit 2. It is noted that the check-in counter 3 and the barrier units 4, 5 are shown for exemplary purposes. In a typical setup, a larger number of check-in counters 3 and/or boarding pass checking units 4 and/or self boarding units 5, is typically present.

The central DCS unit 1 includes a central DCS unit communication interface 10 and the airport DCS unit 2 includes an airport DCS unit communication interface 20. Via the communication interfaces 10, 20, the central DCS unit 1 and the airport DCS unit 2 are operatively coupled for information exchange, particularly flight-related data exchange. The coupling is typically an Internet-based coupling, but may also be any other suited data coupling as generally known in the art.

The central DCS unit 1 further includes a number of n of functional central DCS modules 11-1, 11-2, .. 11-n that are designed to execute a number of central DCS routines. Similarly, the airport DCS unit 2 includes a number of m functional airport DCS modules that are designed to execute a number of airport DCS routines 21-1, 21-2, 21-3, 21-4, ... 21-m. In the example of figure 1, there is a one-to-one matching between functional central DCS modules and central DCS routines respectively functional airport DCS modules and airport DCS routines. As explained before in the general description, however, this is not necessarily the case.

The central DCS unit 1 and/or the airport DCS unit 2 may and typically do include further modules, such as mass storage modules with databases and a central coordination module that schedules and coordinates operation of the single functional modules. Typically, the single functional modules are operatively functionally coupled with the central coordination module and exchange data with the central coordination module of the central DCS unit 1 respectively the airport DCS unit 2. In addition to the functional operational couplings that are shown in figure 1, further functional operational couplings may be present, e. g. between some or all of the functional central DCS modules 11-1, 11-2, ... 11-n respectively between some or all of the functional airport DCS modules 21-1, 21-2, ... 21-m.

The set of central DCS routines that may be carried out by the central DCS unit 1 is at least partly disjunct from the set of airport DCS routines that may be carried out by the airport DCS unit 2. Some routines may accordingly only be carried out by the central DCS unit 1, while some other routines may only be carried out by the airport DCS unit 2.

In the exemplary embodiment of figure 1, the functional central DCS module 11-1 is a fleet management module that is designed to carried out fleet management routines such as adding new aircraft to the fleet, removing aircraft from the fleet , and marking aircrafts for maintenance/service.

Further exemplarily, one of the functional central DCS modules is a through check-in module that is designed to execute a through check-in routine for through check-in of passengers and/or baggage as generally known in the art.

Further exemplarily, the functional central DCS module 11-n is a post departure messenger unit that is designed to execute a post departure message routine, the post departure message routine including sending post departure message as generally known in the art.

Further of such routines that are typically only implemented on the central DCS unit 1 are check-in routines that are typically carried out remote from the departure airport, in particular mobile check-in and (Internet -based) online check-in routines. Such external check-in options, i. e. check-in options that do not involve a counter at the departure airport, are favourably automatically disabled upon or some time before the regular check-in starts in order to avoid data inconsistencies in case of a communication breakdown.

It is noted, however, that a subset of the before-mentioned routines may also be implemented on the airport DCS unit 2 and the airport DCS unit 2 may be designed to carry out such routines.

In the exemplary embodiment of figure 1, the functional airport DCS module 21-2 is a counter check-in module that is designed to execute a counter check-in routine for passengers and/or baggage. Counter check-in may be carried out using an RFID boarding pass. The counter check-in routine as executed by counter check-in module 21-2 accordingly is or includes an RFID communication routine.

In the exemplary embodiment of figure 1, the check-in counter 3 is largely designed in the same way as the check-in counter for passenger and baggage check-in as known in the art and is operated by a counter agent. The check-in counter 3 includes a generally known terminal device 30, and RFID reader 31 and a baggage scale 32. The RFID reader 31 and the baggage scale 32 are operatively functionally coupled with the terminal device 30. The terminal device 30 is operatively functionally coupled with the counter check-in module 21-2 a via communication link as generally known in the art, e. g. via local area network (LAN). Via the terminal device 30, the RFID reader 31 and the baggage scale 32 are also operationally functional coupled with the counter check-in module 21-2. Alternatively, such couplings may be direct and separate from the coupling of the terminal device 30. It is further noted that the split between the check-in counter 3 and the airport DCS unit 2 as shown in figure 1 is mainly made for clarity reasons. Via the before-described operational functional couplings, the terminal device 30 can also be considered as functional part of the airport DCS unit 2. Furthermore, the check-in counters the and the airport DCS unit 2 may be formed fully or partly integral with each other.

The check-in counter 3 of the exemplary embodiment operates in substantially the same way as it is known from check-in counters and check-in procedures according to the state of the art. The known step of printing a boarding pass, however, is modified as follows: Rather than simply printing a standard boarding pass, the counter agent picks an RFID boarding pass with a boarding RFID chip from a pool of RFID boarding passes. As explained before in the general description, the boarding RFID chips stores (e. g. numeric or alphanumeric) passenger identification codes. The passenger identification codes are pre-stored on the boarding RFID chips and the counter agent may pick any RFID boarding pass. The passenger identification code that is stored on the boarding RFID chip of the picked RFID boarding pass is subsequently red by the RFID reader 31 and transmitted to the counter check-in module 21-2. Via an RFID check-in routine that is executed by or under control of the counter check-in module 21-2, the passenger identification code is associated with a specific passenger and a specific flight. Along with this association, the status of this passenger is changed to "checked in" in a corresponding database of the airport DCS unit 2. If - as it is normally the case - operational coupling to the central DCS unit 1 is available, the status change is further automatically transmitted to the central DCS unit 1 where a corresponding database is updated. While not shown in figure 1 for clarity reasons, the check-in counter 3 typically further comprises a paper boarding pass printer. Via this boarding pass printer, a paper-based boarding pass may be printed out additionally and serve for passenger information purposes.

Optionally, the check-in counter 3 may comprise an image capturing device (not shown) for capturing a portrait photograph or scanning a passport photograph as explained before in the general description of the invention.

Optionally, the counter check-in module 21-2 and the RFID check-in routine are designed to check, via the baggage scale 32, whether an overweight surcharge is due and enable, in the affirmative case, the association with the passenger with a passenger identification code and/or printing of an RFID boarding card only after valid payment of this overweight surcharge.

Optionally, the check-in counter 3 and the airport DCS unit 2 are further designed for through-checking. For subsequent connection flights, the paper-based boarding pass is printed by the optional boarding pass printer without associating the passenger with a passenger identification code of an boarding RFID chip for such connection flights. As explained before in the general description, the paper-based boarding pass or passes for the connection flight or connection flights may be used directly for regular check-in at the transfer airport or transfer airports, following procedures as known in the art.

In a typical installation, the airport DCS unit 2 and the check-in counter 3 are installed at an airport that may serve as transfer airport. The airport DCS unit 2 and the check-in counter 3 may therefore be designed for entering information from a graphical boarding pass, e. g. via manual terminal input or barcode reader and to associate a passenger identification code of an check-in RFID chip with this specific passenger. Additionally or alternatively, dedicated through checking counters (not shown in figure 1) may be provided for this purpose.

The exemplary setup of figure 1 further includes a boarding pass checking unit 4. The boarding pass checking unit 4 includes a barrier unit 40 and a barrier RFID reader 41. The barrier unit 40 and the barrier RFID reader 41 are operatively coupled to the airport DCS unit 2, particular to a boarding pass checking module 21-3 of the airport DCS unit 2. The boarding pass checking module 21-3 is designed to execute a boarding pass checking routine, the boarding pass checking routine being an RFID communication routine. As explained before in context of the check-in counter 3, the split between the airport DCS unit 2 and the boarding pass checking unit 3 is made for clarity purpose and does not imply a specific configuration. Like the check-in counter 3, the boarding pass checking unit may be considered as functional part of the airport DCS unit 3. In a typical airport installation, the boarding pass checking unit 4 is installed at the transition between the public and the security areas of an airport. The boarding pass checking unit 4 and/or a self boarding unit 5 as discussed further below in more detail may optionally be designed to display a previously captured photograph of an air passenger as explained before.

Upon an RFID boarding pass with a valid association between a specific passenger and a specific flight that is accessible via the boarding pass checking unit 4 being presented to the RFID reader 41, the boarding pass checking module 21-3 controls the barrier unit 40 to open in a generally known way, thus allowing the corresponding passenger to pass. Along with allowing the passenger to pass, a passenger status is accordingly updated in a database of the airport DCS unit 2. Upon presenting an RFID boarding pass without valid association between a specific passenger and a flight, the boarding pass checking module 21 -3 does not control the barrier unit 40 to open. This is the case, e. g. if no passenger is associated with the boarding RFID chip that is presented to the RFID reader 41, if an association between passenger and the passenger identification code is stored on the boarding RFID chip is given but indicates the corresponding flight leaving from a different terminal, or the like.

While not shown in figure 1, a conventional barcode reader for graphical barcodes is optionally present in addition to allow the passing of passengers without RFID boarding pass. For this type of embodiment, the boarding pass checking unit 4 may be a boarding pass checking unit as known in the art that is additionally equipped with the RFID reader 41.

Rather than a coupling between the barrier unit 40 and the RFID reader 41 via the boarding pass checking module 21-3, the barrier unit 40 may be designed for manual operation, e. g. via security staff.

The exemplary setup of figure 1 further includes as self boarding unit 5. The self boarding unit 5 includes a barrier unit 50 and a combined RFID reader/RFID collecting unit 51 in operative coupling with a passenger boarding module 21-4 of the airport DCS unit 2. The boarding module 21-4 is designed to execute a passenger boarding routine, the passenger boarding routine being an RFID communication routine.

Upon an RFID boarding pass with a valid association between a specific passenger that is authorized to board a specific flight that is accessible via the barrier unit 50 and the passenger identification code that is stored on the boarding RFID chip being presented to the RFID reader 51, the boarding module 21-4 controls the barrier unit 50 to open in a generally known way, thus allowing the corresponding passenger to pass and board a plane. Like for present self boarding systems, the self boarding unit 5 is typically installed directly at a gate and the barrier unit 50 enables only access to one specific plane and a specific flight. That is, the self boarding unit 5 is, at any given point in time, associated with a specific flight.

Since the RFID boarding pass shall be retained at the airport (and not taken to the plane) for subsequent re-use and is further no longer required after boarding, it is automatically collected for return to the pool of RFID boarding passes. Along with reading the passenger identification code and collecting the RFID boarding pass, a passenger status is accordingly updated in a database of the airport DCS unit 2 to "boarded". Furthermore, the passenger boarding module 21-4 controls the airport DCS unit 2 to cancel the association between the boarded passenger and the passenger identification code that is stored in the boarding RFID chip.

While not shown in figure 1, a conventional barcode reader for graphical barcodes is optionally present as part of the self boarding unit 5 to allow the boarding of passengers without RFID boarding pass. For this type of embodiment, the self boarding unit 5 may be a self boarding unit as known in the art that is additionally equipped with the RFID reader/RFID collecting unit 51.

In a variant, only an RFID reader without RFID collecting unit is present and the RFID boarding passes may be collected manually, e. g. by a gate agent. In a further embodiment, the boarding unit 5 is not a self boarding unit and the barrier unit 51 is designed for manual operation by a gate agent upon an indication that a passenger is cleared for boarding.

Further in the example of Figure 1, an optional external DCS 6 is shown that is operatively coupled to the central DCS unit communication interface 10. The split DCS with central DCS unit 1 and airport DCS unit 2 on the one hand and the external DCS 6 on the other hand interact and exchange data as discussed above in the context of the general description. Instead of or alternatively to the external DCS 6, another external reservation system may be present in an analogue way.

In the example of Figure 1, an exemplary number of two further optional airport DCS units 2', 2" are shown that are designed and operate in the same way as the before-discussed airport DCS unit 2. The further airport DCS units 2', 2" are typically installed at further airports.

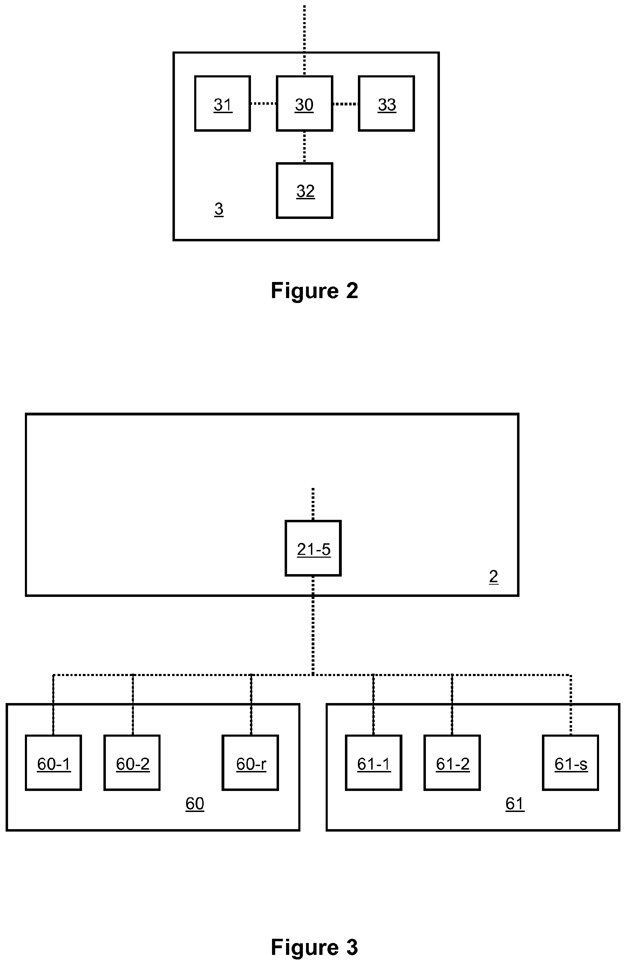

In the following, reference is additionally made to figure 2. Figure 2 shows a further exemplary check-in counter 3 that may be operatively coupled to or be part of an embodiment of an airport DCS unit 2. The check-in counter 3 of figure 2 includes an additional RFID programmer 33. A check-in routine of the airport DCS unit 2, such as an RFID check-in routine as explained before, and/or a baggage handling routine, may control the RFID programmer 33 to program baggage identification data, in particular baggage identification data according to the IATA standards, into a baggage RFID chip or a number of baggage RFID chips as generally explained before. Further RFID readers may be present as part of the airport baggage handling system, e. g. at bagged conveyer belts, in a sorting room or the like in substantially the same way as it is presently the case for graphical barcode-based baggage tag readers. Such RFID readers are a functional part of or operatively coupled to the airport DCS unit for supervising and controlling the baggage flow.

While, in the embodiment of figure 2, a boarding RFID chip reader 31 is present as explained before, this is not essential. Baggage handling based on RFID chips may also be provided independent from and without relying on RFID boarding passes.

In the following, reference is additionally made to figure 3. Figure 3 shows an embodiment of an airport DCS unit 2 that includes and/or is operatively coupled with a passenger location unit.

In the exemplary setup, the passenger location unit includes a coordination module 21 -5 that is general part of the airport DCS unit 2. In the shown exemplary architecture, the coordination module 21-5 is operatively coupled to a number of RFID communication units 60-1, 60-2, ... 60-r, and 61-1, 61-2, ... 61-s via a communication link as generally know, e. g. via a LAN or WLAN network The RFID communication units 60-1, 60-2,... 60-r form a first set 60 of r RFID communication units and are exemplary installed at a first airport terminal. Similarly, the RFID communication units 61-1, 61-2,... 61-s form a second set 61 s of RFID communication units and are exemplary installed at a second airport terminal. At or favourably shortly before the end of the general boarding time for a specific flight, the airport DCS unit 2 checks the status of all passengers that are booked for this flight. For passengers that are not (yet) marked as "boarded", a passenger location routine is initiated via the coordination module 21-5. As part of the passenger location routine, the coordination module 21-5 transmits passenger identification data for the missing (that is, not (yet) boarded) passenger(s) to the set 60 respectively 61 of RFID communication units, in dependence of the departure terminal of the flight.

The passenger identification data include or comprise of the passenger identification code(s) that are stored on the RFID boarding chip(s) of these missing passenger(s). The set 60 respectively 61 of RFID communication units is activated and broadcasts the passenger identification code(s) of the missing passenger(s) as explained in more detail above in the general description. If an RFID boarding chip responds, an acknowledgement signal is transmitted from the corresponding RFID communication unit to the coordination unit 21-5. Each of the RFID communication units 60-1, 60-2, ... 60-r, and 61-1, 61-2, ... 61-s has a unique identifier that is transmitted along with or as part of the acknowledgment signal. Based on this unique identifier, the coordination unit 21-5 identifies the airport section respectively the terminal section in which the missing passenger is located. Furthermore, a corresponding signal is transmitted from the coordination unit 21-5 to a terminal unit (not shown) where a corresponding airport section is displayed. There may be a central terminal unit and/or a number of terminal units and the indication may especially be given on a terminal unit that is closest to the airport section respectively the terminal section where the missing passenger is located. Alternatively or additionally, a corresponding signal may be provided to a device that is carried by a airport or airline employee, such as to a cell phone or pager device.

It is noted that, in the example of figure 3, while the RFID communication units RFID communication units 60-1, 60-2, ... 60-r, and 61-1, 61-2, ... 61-s are shown separately from the airport DCS unit 2, they form functional part of the airport DCS unit 2 in the shown architecture is merely exemplary.

## Claims

1. Departure Control System (DCS), including:
a) a central DCS unit (1), the central DCS unit (1) including a central DCS unit communication interface (10) for operatively connecting to and exchanging information with at least one airport DCS unit (2) remote from the central DCS unit (1);
b) at least one airport DCS unit (2), the at least one airport DCS unit (2) including an airport DCS unit communication interface (20) for operatively connecting to and exchanging information with the central DCS unit (1);
wherein the central DCS unit (1) is designed to execute a set of central DCS routines and the at least one airport DCS unit (2) is designed to execute a set of airport DCS routines;
wherein the at least one airport DCS unit (2) includes or is operatively connected to an RFID communication unit, the RFID communication unit being configured to exchange flight-related data, in particular flight-related data of a specific passenger, with an RFID chip,
wherein the flight-related data include baggage identification data, the baggage identification data being indicative for a specific piece of baggage and a specific flight, and wherein the RFID communication unit includes an RFID programmer (33), and wherein the at least one airport DCS unit (2) is configured to program the baggage identification data for a plurality of flights into one and the same RFID chip, the RFID chip being a recordable RFID chip and being associated with the piece of baggage.

2. Departure Control System (DCS) according to claim 1, wherein the airport DCS unit (2) and/or the RFID programmer (33) are configured to delete baggage identification data originating from a precious flight and/or mark such data as unreadable.

3. Departure Control System (DCS) according to either of the preceding claims, configured to determine whether an RFID chip is authorized, and to accept only authorized RFID chips.

4. Departure Control System (DCS) according to claim 3, configured to manage authorization of RFID chips in a in a respective data base containing RFID chip identification data, such as a unique RFID chip number.

5. Departure Control System (DCS) according to either of the preceding claims, configured to write baggage identification data only onto the first RFID chip identified on the piece of baggage if a number of RFID chips is integrated or attached to the piece of baggage.

6. Departure Control System (DCS) according to either of claims 1 to claim 4, configured to program identical baggage identification data into a number of RFID chips, in particular RFID chips arranged at different sides of a piece of baggage.

7. Departure Control System (DCS) according to either of the preceding claims, configured to check a unique RFID chip number against a stolen baggage database.

8. Airport DCS unit (2), wherein the airport DCS unit (2) includes or is operatively connected to an RFID communication unit, the RFID communication unit being configured to exchange flight-related data, in particular flight-related data of a specific passenger, with an RFID chip, wherein the flight-related data include baggage identification data, the baggage identification data being indicative for a specific piece of baggage and a specific flight, and wherein the RFID communication unit includes an RFID programmer (33), and wherein the at least one airport DCS unit (2) is configured to program the baggage identification data for a plurality of flights into one and the same RFID chip, the RFID chip being a recordable RFID chip and being associated with the piece of baggage.

9. Piece of baggage, including at least one permanently attached or integrated recordable RFID chip, the at least one RFID chip being configured for programming flight-related data, in particular baggage identification data being indicative for a specific piece of baggage and a specific flight, for a plurality of flights.

10. Piece of baggage according to claim 9, wherein a number of RFID chips is present at different sides of the piece of baggage.

11. Piece of baggage according to either of claim 9 to claim 10, wherein the at least one RFID chip is arranged on an inside of the piece of baggage or integrated into a shell of the piece of baggage.
